# EUROPEAN PATENT APPLICATION

(11) **EP 4 394 648 A1**
(43) Date of publication of application: **03.07.2024**
(21) Application number: 23206653.0
(22) Date of filing: 30.10.2023
(51) Int. Cl.: G06F 40/157, G06F 40/284, G06F 40/30, G06F 40/44, G06F 40/45

(54) **PARALLEL CORPUS CONSTRUCTION PROGRAM, PARALLEL CORPUS CONSTRUCTION METHOD, AND INFORMATION PROCESSING APPARATUS**

(30) Priority: 28.12.2022 JP 2022211073
(71) Applicant: FUJITSU LIMITED, Kawasaki-shi, Kanagawa 211-8588 (JP)
(72) Inventor: NGUYEN, An Le, Kawasaki-shi, Kanagawa, 211-8588 (JP)
(74) Representative: Hoffmann Eitle

(57) **Abstract**

An information processing apparatus acquires a first parallel corpus in which a first sentence, which includes a first named entity in a first language, and a second sentence, which includes a second named entity in a second language corresponding to the first named entity, are associated, extracts a third named entity whose degree of similarity with the first named entity exceeds a threshold from first dictionary data including a plurality of named entities in the first language, specifies a fourth named entity corresponding to the third named entity using second dictionary data indicating correspondence between named entities in the first language and named entities in the second language, and generates a second parallel corpus by replacing the first named entity included in the first sentence with the third named entity and replacing the second named entity included in the second sentence with the fourth named entity.

## Description

### FIELD

The embodiments discussed herein relate to a parallel corpus construction program, a parallel corpus construction method, and an information processing apparatus.

### BACKGROUND

A parallel corpus is sometimes used as a database in natural language processing by a computer. A parallel corpus stores sentences written in a given natural language in association with sentences with an equivalent meaning written in another natural language. As one example, a computer may use a parallel corpus prepared in advance as training data to train a machine translation model for converting text in one language into text in another language. The size and quality of the parallel corpus in use will affect the quality of natural language processing tasks, such as machine translation.

Note that a machine learning method has been proposed that recognizes named entities from a source text written in a source language and uses the source text and named entity information as input data to train a machine translation model that includes an attention mechanism.

See for example, Japanese Laid-open Patent Publication No. 2022-141191.

Parallel corpora are often created manually by human who have deep understand multiple languages. This means that it is not easy to amass a large parallel corpus for use in natural language processing. As one example, when at least one of the two languages related to a natural language processing task is a low-resource language with few speakers, a sufficient parallel corpus may be unavailable. As another example, when the natural language processing task is in a specific domain, there is the risk that only a small parallel corpus might be amassed for that specific domain.

### SUMMARY

According to one aspect, it is an object of the present invention to augment a parallel corpus.

According to an aspect, there is provided a parallel corpus construction program that causes a computer to execute a process including: acquiring a first parallel corpus in which a first sentence including a first named entity in a first language and a second sentence including a second named entity in a second language corresponding to the first named entity are associated; extracting, from first dictionary data including a plurality of named entities in the first language, a third named entity in the first language whose degree of similarity with the first named entity exceeds a threshold; specifying a fourth named entity in the second language that corresponds to the third named entity using second dictionary data indicating correspondence between named entities in the first language and named entities in the second language; and generating a second parallel corpus, which differs from the first parallel corpus, by replacing the first named entity included in the first sentence with the third named entity and replacing the second named entity included in the second sentence with the fourth named entity.

### BRIEF DESCRIPTION OF DRAWINGS

FIG. 1 is a diagram useful in explaining an information processing apparatus according to a first embodiment;
FIG. 2 depicts example hardware of an information processing apparatus according to a second embodiment;
FIG. 3 depicts example recognition of a named entity from a first sentence (source sentence) in a parallel corpus;
FIG. 4 depicts an example structure of a named entity recognition model;
FIG. 5 depicts an example specifying of a named entity from a second sentence (target sentence) in a parallel corpus;
FIG. 6 depicts one example of a similarity matrix used for multilingual phrase alignment;
FIG. 7 depicts one example of extraction of other named entities with similar character strings;
FIG. 8 depicts an example extraction of possible terminology pairs;
FIG. 9 depicts another example extraction of possible terminology pairs;
FIG. 10 depicts one example of an augmented parallel corpus;
FIG. 11 depicts an example structure of a machine translation model;
FIG. 12 is a block diagram depicting example functions of an information processing apparatus; and
FIG. 13 is a flowchart depicting an example procedure of corpus augmentation.

### DESCRIPTION OF EMBODIMENTS

Several embodiments will be described below with reference to the accompanying drawings.

### [First Embodiment]

A first embodiment will now be described.

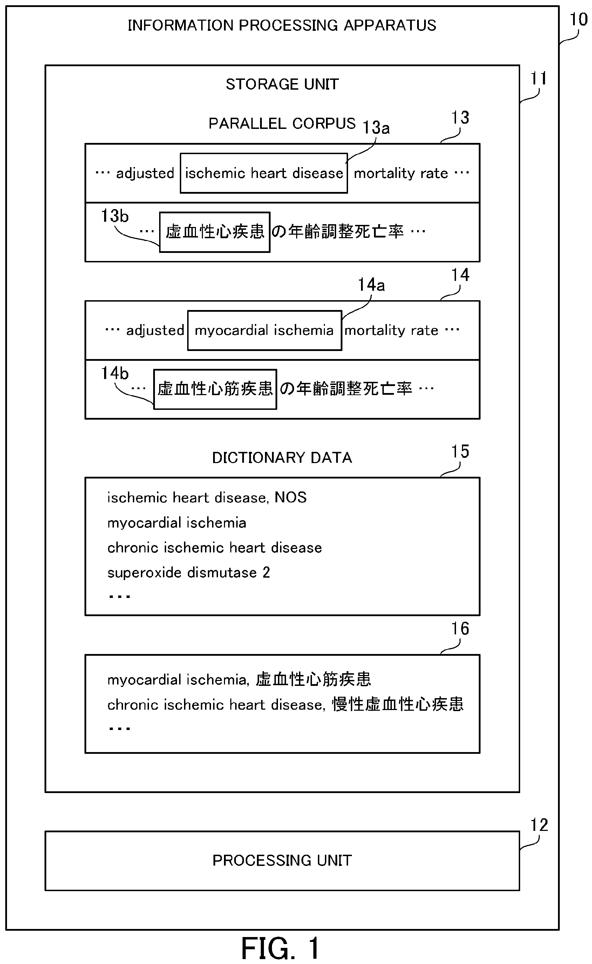

FIG. 1 is a diagram useful in explaining an information processing apparatus according to a first embodiment.

An information processing apparatus 10 according to the first embodiment augments a parallel corpus used for natural language processing. The information processing apparatus 10 automatically generates a new parallel corpus by partially amending an existing parallel corpus. As one example, the generated parallel corpus is used as training data for training a machine translation model. However, the generated parallel corpus may be used for natural language processing tasks aside from machine translation.

Machine learning and natural language processing tasks using a parallel corpus may be executed by the information processing apparatus 10 or may be executed by another information processing apparatus. The information processing apparatus 10 may be a client apparatus or may be a server apparatus. The information processing apparatus 10 may be referred to as a "computer", a "parallel corpus generating apparatus", a "natural language processing apparatus", a "machine learning apparatus", or a "machine translation apparatus".

The information processing apparatus 10 includes a storage unit 11 and a processing unit 12. The storage unit 11 may be a volatile semiconductor memory, such as random access memory (RAM) or may be non-volatile storage, such as a hard disk drive (HDD) or flash memory.

As examples, the processing unit 12 is a processor such as a central processing unit (CPU), a graphics processing unit (GPU), or a digital signal processor (DSP). However, the processing unit 12 may include electronic circuitry such as an application specific integrated circuit (ASIC) or a field programmable gate array (FPGA). As one example, the processor executes a program stored in a memory such as RAM (which may be the storage unit 11). A group of processors may be referred to as a "multiprocessor" or simply as a "processor".

The storage unit 11 stores a parallel corpus 13 and dictionary data 15 and 16. The parallel corpus 13 associates a first sentence (which may be source sentence) written in a first language with a second sentence (which may be target sentence) written in a second language. The parallel corpus 13 may include a plurality of pairs of a first sentence and a second sentence. It is sufficient for the first sentence and the second sentence to be semantically equivalent, and the respective numbers of sentences may differ. As examples, the ratio between the number of sentences may be 1:1, 1:2, 1:3, 2:1, 3:1, or the like.

The first language and the second language are different natural languages. Different natural languages will differ in at least one of character set, grammar, and meanings represented by character strings. It is preferable for the first language to be a high-resource language with a relatively large number of speakers. As one example, the first language is English and the second language is a non-European language. When the natural language processing task is machine translation, one of the first sentence and the second sentence corresponds to an original sentence and the other corresponds to a translation (translated sentence). As one example, the first sentence corresponds to an original sentence and the second sentence corresponds to a translation.

As one example, the parallel corpus 13 is a high-quality parallel corpus that has been manually created by a person who understands the first language and the second language. The parallel corpus 13 may be technical text including terminology from a specified domain, such as the biomedical domain.

In the parallel corpus 13, the first sentence includes a named entity 13a, and the second sentence includes a named entity 13b corresponding to the named entity 13a. As one example, the named entity 13b corresponds to a translation of the named entity 13a, and has the same meaning as the named entity 13a. The expression "named entity" refers to an expression such as a proper noun, a date expression, or a time expression. One named entity may be formed by a single word, or may be formed by two or more words. Named entities may be classified into a plurality of named entity classes according to the type of named entity. As one example, named entities in the biomedical domain may be classified into genes, drugs, diseases, and mutations.

The information processing apparatus 10 may recognize the named entity 13a from the first sentence using a pretrained named entity recognition model. The information processing apparatus 10 may also recognize the named entity 13b from the second sentence using a trained named entity recognition model. The information processing apparatus 10 may also search the second sentence for a phrase corresponding to the named entity 13a included in the first sentence using a trained phrase alignment model.

A multilingual semantic similarity model calculates similarity such as cosine similarity between distributed representation vectors of sentences in different languages. Multilingual distributed representation vectors are calculated by a pretrained multilingual language model, such as Bidirectional Encoder Representations from Transformers (BERT).

Phrase alignment is a process of identifying corresponding phrases or sub-phrases in bilingual or multilingual texts. Given parallel texts, the phrase alignment maps phrases which are semantically equivalent meaning. An output of the phrase alignment consists of pairs of corresponding phrases. The phrase alignment can be achieved through statistical, linguistic, or machine learning-based methods.

The dictionary data 15 includes a plurality of named entities written in the first language. The dictionary data 15 may be divided into named entity classes. As one example, the dictionary data 15 may be divided into dictionary data including gene names, dictionary data including drug names, dictionary data including disease names, and dictionary data including mutation names.

The dictionary data 16 indicates correspondence between the named entities in the first language and the named entities in the second language. The dictionary data 16 may be multilingual terminology dictionary data in which named entities in a plurality of languages representing a concept are written in association with an identifier identifying that concept. The named entities included in the dictionary data 16 may be compiled and organized by an expert.

The processing unit 12 acquires the parallel corpus 13. The processing unit 12 extracts a named entity 14a in the first language, whose similarity with the named entity 13a exceeds a threshold, from the dictionary data 15. The processing unit 12 may extract a plurality of named entities as the named entity 14a. The degree of similarity between the named entity 13a and the named entity 14a is the degree of similarity between the respective character strings, for example.

The processing unit 12 may use an edit distance (or "Levenshtein distance") as an index of similarity. Alternatively, the processing unit 12 may use cosine similarity as the index of similarity. When cosine similarity is used, as one example, the processing unit 12 decomposes the character string of each named entity into n-grams and generates a vector indicating whether each of plurality of types of n-gram is included in a character string. The processing unit 12 calculates the cosine similarity between two vectors corresponding to two named entities. The cosine similarity is obtained by dividing the inner product of two vectors by the respective magnitudes of the two vectors, and has a value range of -1 or more and 1 or less.

The processing unit 12 uses the dictionary data 16 to specify a named entity 14b in the second language that corresponds to the named entity 14a. The dictionary data 16 may include a plurality of named entities in the second language that have the same concept as the named entity 14a. In this case, the processing unit 12 may specify every named entity corresponding to the named entity 14a as the named entity 14b. Alternatively, the processing unit 12 may select some out of the plurality of named entities as the named entity 14b.

A multilingual distributed representation vector may be used to select the named entity 14b. As one example, the processing unit 12 uses a multilingual distributed representation vector of a word included in the named entity 14a and a multilingual distributed representation vector of a word included in the named entity 14b to calculate the degree of similarity between the named entity 14a and the named entity 14b. As one example, when the degree of similarity between the named entities 14a and 14b exceeds a threshold, the processing unit 12 adopts that named entity 14b.

The processing unit 12 replaces the named entity 13a included in the first sentence in the parallel corpus 13 with the named entity 14a. The processing unit 12 also replaces the named entity 13b included in the second sentence in the parallel corpus 13 with the named entity 14b. By doing so, the processing unit 12 generates a parallel corpus 14 that differs from the parallel corpus 13. When doing so, the part of the first sentence aside from the named entity 13a and the part of the second sentence aside from the named entity 13b may be the same as in the parallel corpus 13. The processing unit 12 may generate a plurality of pairs of sentences with different named entities 14a and 14b.

The processing unit 12 outputs the generated parallel corpus 14. The processing unit 12 may store the parallel corpus 14 in non-volatile storage, may display the parallel corpus 14 on a display apparatus connected to the information processing apparatus 10, or may transmit the parallel corpus 14 to another information processing apparatus.

As described above, the information processing apparatus 10 according to the first embodiment extracts the named entity 14a, whose degree of similarity with the named entity 13a included in the first sentence in the parallel corpus 13 exceeds a threshold, from the dictionary data 15 that includes a plurality of named entities in the first language. The information processing apparatus 10 specifies the named entity 14b corresponding to the named entity 14a using the dictionary data 16 that indicates the correspondence between named entities in the first language and named entities in the second language. The information processing apparatus 10 generates the parallel corpus 14 by replacing the named entity 13a of the first sentence with the named entity 14a and replacing the named entity 13b included in the second sentence of the parallel corpus 13 with the named entity 14b.

By doing so, the parallel corpus is augmented. As a result, the accuracy of machine learning and natural language processing tasks that use the parallel corpus will improve. In particular, the parallel corpus is augmented for low-resource languages with few speakers and specific domain that are highly specialized.

Replacement of character strings is performed in units of named entities by referring to dictionary data in which named entities are written. This reduces the risk of a non-existent named entity being created. This risk is especially reduced when the named entities include many compound words and nested structures, as in the biomedical field. This also reduces the risk of changes in parts of speech, such as a verb being replaced by a noun. This improves the quality of the parallel corpus 14. Outside of the parallel corpus 13, reference is made to the dictionary data 15 and 16. By doing so, named entities that are not included in the original parallel corpus 13 may be inserted into the parallel corpus 14, which enriches the parallel corpus.

Note that the information processing apparatus 10 may determine the named entity class of the named entity 13a using a trained named entity recognition model, and may select the dictionary data 15 based on the named entity class out of a plurality of dictionary data including different named entities. Doing so increases the potential of sentences that are semantically natural being generated. The information processing apparatus 10 may calculate a degree of character string similarity between the character string indicating the named entity 13a and the character string indicating the named entity 14a. By doing so, the probability of the named entity 14a having a similar concept to the named entity 13a increases.

The dictionary data 16 may be multilingual terminology dictionary data in which named entities in a plurality of languages representing a concept are written in association with an identifier identifying the concept. By doing so, the named entity 14b corresponding to a translation of the named entity 14a is specified with high accuracy. When the dictionary data 16 includes a plurality of named entities in association with the named entity 14a, the information processing apparatus 10 may select the named entity 14b using a distributed representation vector of the words included in the named entity 14a and a distributed representation vector of the words included in the named entity 14b. By doing so, the named entity 14b that is semantically close to the named entity 14a is selected.

The first language may be the language used in an original text inputted into a machine translation model and the second language may be the language used in a translation outputted from the machine translation model. By doing so, the accuracy of the machine translation model is improved, which improves the quality of machine translations.

### [Second Embodiment]

Next, a second embodiment will be described.

An information processing apparatus 100 according to the second embodiment performs data augmentation on a parallel corpus in the biomedical field to expand the parallel corpus. The information processing apparatus 100 also trains a machine translation model using the parallel corpus after data augmentation as training data. The information processing apparatus 100 also performs machine translation using a trained machine translation model. However, this data augmentation, machine learning, and machine translation may be performed by different information processing apparatuses.

The information processing apparatus 100 may be a client apparatus or may be a server apparatus. The information processing apparatus 100 may also be referred to as a "computer", a "data augmentation apparatus", a "parallel corpus generating apparatus", a "natural language processing apparatus", a "machine learning apparatus", or a "machine translation apparatus". The information processing apparatus 100 according to the second embodiment corresponds to the information processing apparatus 10 according to the first embodiment.

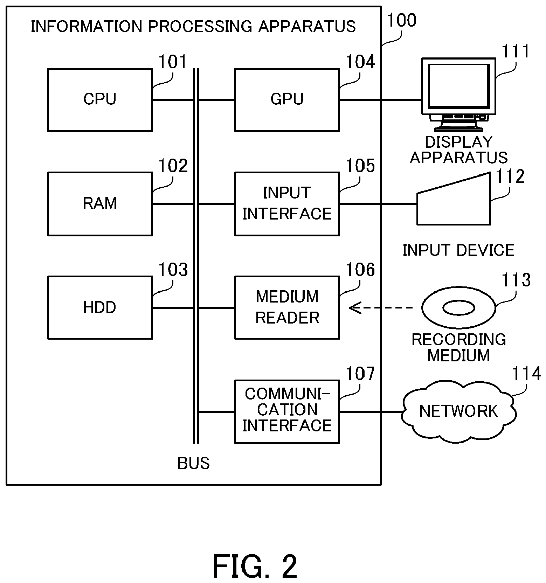

FIG. 2 depicts example hardware of an information processing apparatus according to the second embodiment.

The information processing apparatus 100 includes a CPU 101, a RAM 102, an HDD 103, a GPU 104, an input interface 105, a medium reader 106, and a communication interface 107, which are connected to a bus. The CPU 101 corresponds to the processing unit 12 in the first embodiment. The RAM 102 or the HDD 103 corresponds to the storage unit 11 in the first embodiment.

The CPU 101 is a processor that executes instructions of a program. The CPU 101 loads a program and data stored in the HDD 103 into the RAM 102 and executes the program. The information processing apparatus 100 may include a plurality of processors.

The RAM 102 is a volatile semiconductor memory that temporarily stores a program to be executed by the CPU 101 and data used for computation by the CPU 101. The information processing apparatus 100 may include a type of volatile memory aside from RAM.

The HDD 103 is nonvolatile storage that stores software programs, such as an operating system (OS), middleware, and application software, as well as data. The information processing apparatus 100 may include another type of non-volatile storage, such as flash memory or a solid state drive (SSD).

The GPU 104 performs image processing in cooperation with the CPU 101 and outputs images to the display apparatus 111 that is connected to the information processing apparatus 100. As examples, the display apparatus 111 is a cathode ray tube (CRT) display, a liquid crystal display, an organic electro luminescence (EL) display, or a projector. Other types of output device, such as a printer, may also be connected to the information processing apparatus 100.

The GPU 104 may also be used as a general purpose computing on graphics processing unit (GPGPU). The GPU 104 executes a program according to instructions from the CPU 101. The information processing apparatus 100 may include a volatile semiconductor memory aside from the RAM 102 as GPU memory.

The input interface 105 receives an input signal from an input device 112 connected to the information processing apparatus 100. As examples, the input device 112 is a mouse, a touch panel, or a keyboard. A plurality of input devices may be connected to the information processing apparatus 100.

The medium reader 106 is a reader apparatus that reads programs and data recorded on a recording medium 113. As examples, the recording medium 113 is a magnetic disk, an optical disc, or a semiconductor memory. Magnetic disks include flexible disks (FDs) and HDDs. Optical discs include compact discs (CDs) and digital versatile discs (DVDs). The medium reader 106 copies a program and data read from the recording medium 113 into another recording medium, such as the RAM 102 or the HDD 103. The read program may be executed by the CPU 101.

The recording medium 113 may be a portable recording medium. The recording medium 113 may be used to distribute programs and data. The recording medium 113 and the HDD 103 may also be referred to as "computer-readable recording media".

The communication interface 107 communicates with other information processing apparatuses via a network 114. The communication interface 107 may be a wired communication interface connected to a wired communication apparatus, such as a switch or a router, or may be a wireless communication interface connected to a wireless communication apparatus, such as a base station or an access point.

Next, data augmentation of a parallel corpus will be described. In this second embodiment, it is assumed that a machine translation model performs machine translation from English to Japanese, and the parallel corpus includes English sentences and Japanese sentences. However, it is also possible to perform data augmentation according to the second embodiment to other natural languages. As one example, data augmentation according to the second embodiment is suitable for a parallel corpus for machine translation from English to a non-European language. In this second embodiment, the translated subject matter is in the biomedical field, and the parallel corpus is text in the biomedical field.

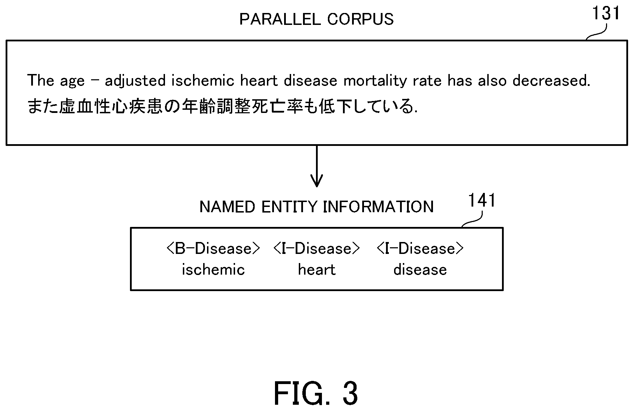

FIG. 3 depicts example recognition of a named entity from a first sentence in a parallel corpus.

The information processing apparatus 100 acquires a parallel corpus 131. As one example, the parallel corpus 131 is manually created by an expert in the biomedical field. The information processing apparatus 100 may extract the parallel corpus 131 from papers in the biomedical field.

The parallel corpus 131 includes English sentences and Japanese sentences corresponding to translations of the English sentences. In a pair of English and Japanese sentences that are semantically equivalent, the ratio of the number of sentences is often 1:1. However, the ratio of the number of sentences may be 1:2, 1:3, 2:1 or 3:1. The parallel corpus 131 may include two or more pairs of English and Japanese sentences. It is not easy to compile a large parallel corpus 131 in which English and Japanese sentences in the biomedical field have been associated. For this reason, the information processing apparatus 100 performs data augmentation on the parallel corpus 131 to enlarge the parallel corpus.

First, the information processing apparatus 100 executes a named entity recognition task on an English sentence included in the parallel corpus 131 to recognize a named entity included in the English sentence. A trained named entity recognition model is used for this named entity recognition task. The information processing apparatus 100 divides the English sentence into words and treats the words as tokens. The information processing apparatus 100 inputs a token string into the named entity recognition model and determines a tag to be attached to each token.

A tag includes a symbol representing a named entity class corresponding to the type of named entity and a symbol representing the relative position of the token within the named entity. The named entity classes include "gene", "drug", "disease", "mutation", and "other".

The relative positions include "single (S)", "beginning (B)", "inside (I)", and "ending (E)". "S" indicates that a token forms the named entity on its own. "B" indicates that the token is the first of a plurality of tokens that form the named entity. "I" indicates that the token is midway in a plurality of tokens forming the named entity. "E" indicates that the token is the end of a plurality of tokens forming a named entity. However, "I" may be assigned to the token at the end.

Named entity information 141 indicates one named entity called "ischemic heart disease" that has been recognized from an English sentence included in the parallel corpus 131. The named entity class of this named entity is "disease" indicating that this named entity is a disease name. Named entity recognition is described in the following non-patent document, for example.
An Nguyen Le, Hajime Morita and Tomoya Iwakura, "Learning Entity-Likeness with Multiple Approximate Matches for Biomedical NER", Proc. of the International Conference on Recent Advances in Natural Language, (RANLP2021), pp. 1040-1049, September 2021.

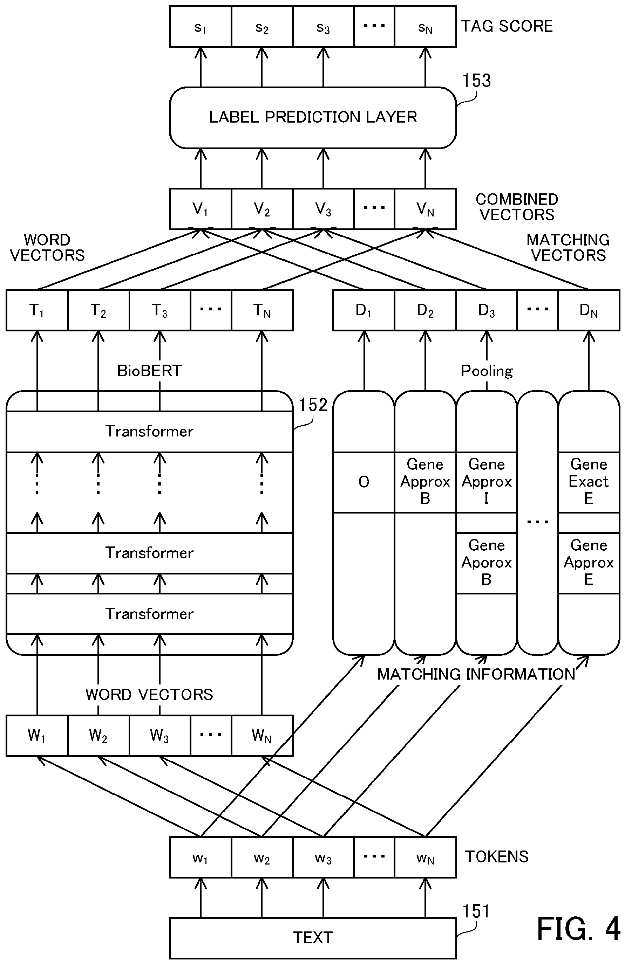

FIG. 4 depicts an example structure of a named entity recognition model.

When a text 151 written in a natural language is provided, the information processing apparatus 100 divides a character string included in the text 151 into tokens w₁, w₂, w₃, ..., w_{N}. A natural language processing technique, such as morphological analysis, may be used for this division into tokens.

The information processing apparatus 100 converts each token into a distributed representation word vector and thereby converts the tokens w₁, w₂, w₃, ..., w_{N} into the word vectors W₁, W₂, W₃, ... . W_{N}. A word vector is a numerical vector in which numerical values are listed for a predetermined number of dimensions. As one example, the number of dimensions in the word vector is 300. The word vectors W₁, W₂, W₃, ..., W_{N} are calculated using a trained multilayer neural network.

The information processing apparatus 100 inputs the word vectors W₁, W₂, W₃, ..., W_{N} to Bidirectional Encoder Representations from Transformers for Biomedical Text Mining (BioBERT) 152, to convert into word vectors T₁, T₂, T₃, ..., T_{N}. BioBERT 152 is a pre-trained multilayer neural network that has been trained by machine learning using texts in the biomedical field as training data. BioBERT 152 includes transformers on 24 layers that are stacked in series. Each transformer is a multilayer neural network that transforms an inputted vector into another vector.

Separately to the word vectors T₁, T₂, T₃, ..., T_{N}, the information processing apparatus 100 calculates matching vectors D₁, D₂, D₃, ..., D_{N} corresponding to the tokens w₁, w₂, w₃, ..., w_{N}. A matching vector of a token is produced by converting matching information, which indicates a matching state between a named entity dictionary, in which known named entities are written, and the token in question, into a distributed representation vector. Matching vectors are calculated as follows.

The information processing apparatus 100 exhaustively generates n-grams indicating n consecutive tokens from the tokens w₁, w₂, w₃, ..., w_{N}. Here, n = 1, 2, 3, ..., N. From tokens w₁, w₂, w₃, ..., w_{N}, N unigrams are generated, N-1 bigrams are generated, and N-2 trigrams are generated.

The information processing apparatus 100 performs approximate character string matching for each n-gram with a named entity dictionary that has been prepared in advance. In the named entity dictionary, known named entities, such as gene names, drug names, disease names, and mutation names, are listed together with the named entity classes to which such named entities belong. During approximate character string matching, the information processing apparatus 100 calculates an edit distance between one named entity written in the named entity dictionary and one n-gram. The edit distance is the number of single-character additions, single -character substitutions, or single-character deletions performed to make two character strings match. An edit distance of zero means that the two character strings are an exact match.

When the edit distance is less than a threshold, the information processing apparatus 100 determines that the named entity and the n-gram in question are similar. When a named entity that is similar to an n-gram is found, the information processing apparatus 100 generates matching information for each token included in the n-gram. The matching information includes three elements, "class", "fitness", and "position".

The "class" is the named entity class to which a known named entity belongs. The "fitness" is a flag indicating whether the n-gram and the known named entity are in a relationship that is an exact match ("Exact") or an approximate match ("Approximate"). The "position" is the relative position of the token of interest in the n-gram. This position is one of "S", "B", "I", and "E".

Out of the tokens w₁, w₂, w₃, ..., w_{N}, only one matching information may be obtained for some tokens, two or more matching information may be obtained for other tokens, and no matching information may be obtained for other tokens. Dummy matching information, whose class is the "other" class, is generated for a token for which no matching information is obtained.

The information processing apparatus 100 converts each matching information into a matching vector. Since there are few patterns of different matching information (or "matching patterns"), a matching pattern dictionary in which matching patterns and their distributed representations are associated with each other is prepared in advance. As one example, the information processing apparatus 100 assigns an identification number to each matching pattern and trains a multilayer neural network that uses such identification numbers for inputting and outputting. The information processing apparatus 100 adopts, as a matching vector corresponding to the matching pattern, a feature vector listing numerical values that were calculated on intermediate layers when the identification number of a matching pattern was provided to the input layer. The number of dimensions of the matching vector is 100, for example.

When different patterns of matching information have been generated for one token, the information processing apparatus 100 gathers two or more matching vectors corresponding to different matching information into one matching vector through a pooling process. The pooling process is a process that generates a single vector with the same number of dimensions by performing a numerical operation on each dimension in two or more vectors. Examples of pooling processes include "Max Pooling" and "Average Pooling". Max pooling is a pooling process that selects the largest numerical value for each dimension out of two or more vectors. Average pooling is a pooling process that calculates an average value of the numerical values for each dimension included in two or more vectors.

In this way, the matching vectors D₁, D₂, D₃, ..., D_{N} corresponding to the tokens w₁, w₂, w₃, ..., w_{N} are calculated. The information processing apparatus 100 combines the word vectors T₁, T₂, T₃, ..., T_{N} and the matching vectors D₁, D₂, D₃, ..., D_{N} to generate the combined vectors V₁, V₂, V₃, ..., V_{N}. Here, for each token, the matching vector is concatenated after the word vector. As one example, a combined vector has 400 dimensions.

The information processing apparatus 100 inputs the combined vectors V₁, V₂, V₃, ..., V_{N} into a label prediction layer 153 and calculates tag scores s₁, s₂, s₃, ..., s_{N} corresponding to the tokens w₁, w₂, w₃, ..., w_{N}. A tag score includes a certainty factor for each of a plurality of tags. The information processing apparatus 100 determines the tags to be assigned to the tokens w₁, w₂, w₃, ..., w_{N} based on these tag scores s₁, s₂, s₃, ..., s_{N}. The information processing apparatus 100 may select the tag with the highest certainty factor out of the plurality of tags for each token.

The label prediction layer 153 is a multilayer neural network. As one example, the label prediction layer 153 is a bi-directional Long Short-Term Memory (LSTM). An LSTM is a multi-layer neural network that holds internal states. Since internal states are held, when a plurality of combined vectors are successively inputted into an LSTM, the tag score for a given combined vector will depend not only on that combined vector but also on the preceding combined vectors.

A bidirectional LSTM includes a forward LSTM, into which a plurality of combined vectors are inputted in the forward direction, and a backward LSTM, into which a plurality of combined vectors are inputted in the backward direction. The bi-directional LSTM combines the output vector of the forward LSTM and the output vector of the backward LSTM corresponding to the same token to calculate a final tag score for that token.

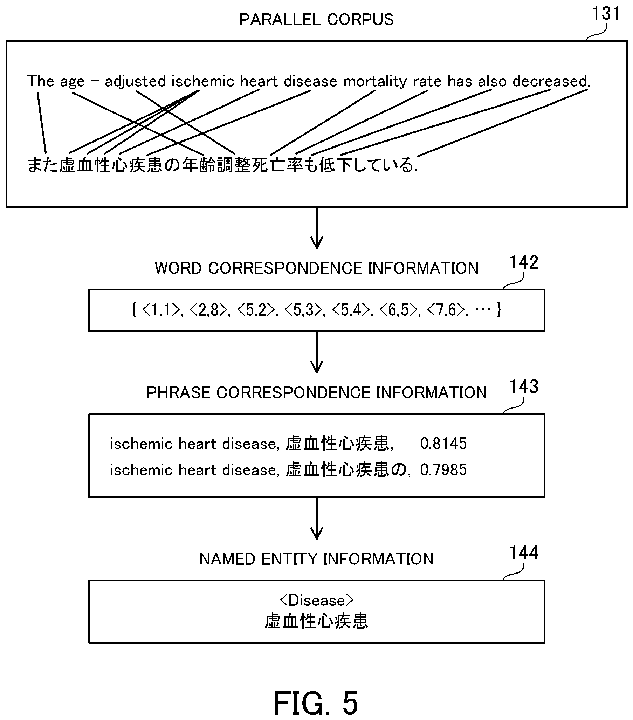

FIG. 5 depicts an example specifying of a named entity from a second sentence in a parallel corpus.

Next, the information processing apparatus 100 specifies a Japanese named entity corresponding to a recognized English named entity from a Japanese sentence included in the parallel corpus 131. When doing so, the information processing apparatus 100 uses a phrase alignment model that determines the correspondence of phrases between sentences in different languages.

The information processing apparatus 100 inputs the English token string and the Japanese token string into a trained phrase alignment model and thereby generates word correspondence information 142 indicating the correspondence between the English token and the Japanese token. An English token corresponds to a word, and a Japanese token corresponds to a morpheme. The word correspondence information 142 includes a plurality of pairs of token numbers. The first token number in a pair indicates the position of the token in the English sentence. The second token number in a pair indicates the position of the token in the Japanese sentence. Each pair indicates the Japanese token that corresponds to an English token. As examples, the word correspondence information 142 indicates that "ischemic" corresponds to the kanji" 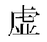 (kyo)", " 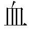 (ketsu)", and " 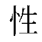 (sei)", "heart" corresponds to the kanji " 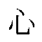 (shin) ", and "disease" corresponds to kanji " 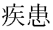 (shikkan)".

Based on the word correspondence information 142, the information processing apparatus 100 performs a probability calculation that calculates the probability that each of a plurality of phrases included in a Japanese sentence corresponds to a recognized English named entity. By doing so, the information processing apparatus 100 generates phrase correspondence information 143. A phrase contains one or more consecutive tokens. As one example, in the phrase correspondence information 143, the probability that " 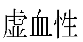 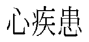 (kyoketsusei shin shikkan)" in Japanese corresponds to "ischemic heart disease" is 0.8145, and the probability that " 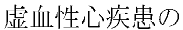 (kyoketsusei shin shikkan no)" corresponds to "ischemic heart disease" is 0.7985.

The information processing apparatus 100 generates named entity information 144 by selecting a phrase with the highest probability out of the phrase correspondence information 143. The named entity information 144 indicates a Japanese named entity included in the parallel corpus 131 corresponding to the English named entity included in the parallel corpus 131. As one example, the named entity information 144 indicates " 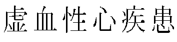 (kyoketsusei shin shikkan)".

As one example, phrase alignment is described in the following non-patent document.
Zi-Yi Dou and Graham Neubig, "Word Alignment by Fine-tuning Embeddings on Parallel Corpora", Proc. of the 16th Conference of the European Chapter of the Association for Computational Linguistics (EACL2021), pp. 2112-2128, April 2021.

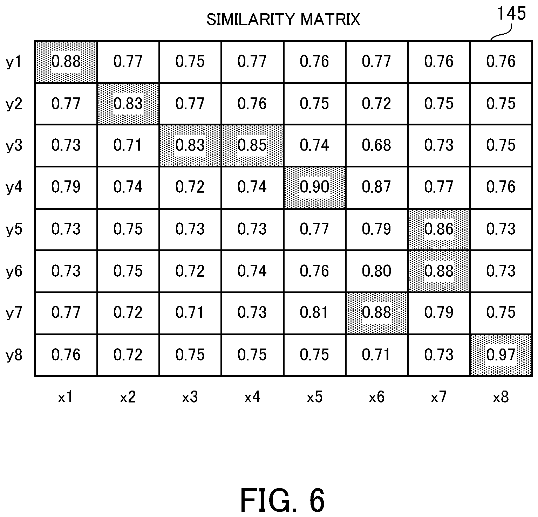

FIG. 6 depicts one example of a similarity matrix used for multilingual phrase alignment.

In multilingual phrase alignment, the information processing apparatus 100 calculates a multilingual distributed representation vector for each English token and a multilingual distributed representation vector for each Japanese token. A trained multilingual BERT, for example, is used to calculate the multilingual distributed representation vectors. Multilingual BERT is trained to calculate similar distributed representation vectors from English words and Japanese words with similar meanings.

The information processing apparatus 100 calculates the cosine similarity of multilingual distributed representation vectors between one token included in an English sentence and one token included in a Japanese sentence. The cosine similarity is obtained by dividing the inner product of two vectors by the respective magnitudes of the two vectors, and has a value range of -1 or more and 1 or less. The higher the cosine similarity, the higher the degree of similarity.

A similarity matrix 145 indicates cosine similarities that have been exhaustively calculated for a plurality of tokens included in an English sentence and a plurality of tokens included in a Japanese sentence. Columns x1, x2, ..., x8 in the similarity matrix 145 correspond to English tokens. Rows y1, y2, ..., y8 in the similarity matrix 145 correspond to Japanese tokens. Based on the similarity matrix 145, the information processing apparatus 100 determines a Japanese token to be associated with each English token.

As a general rule, the information processing apparatus 100 selects a row with the highest cosine similarity in each column in the similarity matrix 145. As a result, the Japanese token that is most similar is selected for each English token. However, in consideration of the characteristics of the languages, the information processing apparatus 100 may limit the number of Japanese tokens associated with the same English token, and may limit the number of English tokens associated with the same Japanese token.

The information processing apparatus 100 may also preferentially associate tokens that are adjacent in a Japanese sentence with tokens that are adjacent in an English sentence. In this case, elements on a diagonal in the similarity matrix 145 are likely to be selected. The information processing apparatus 100 may determine the correspondence between tokens through forward scanning where columns are scanned from left to right and backward scanning where the columns are scanned from right to left.

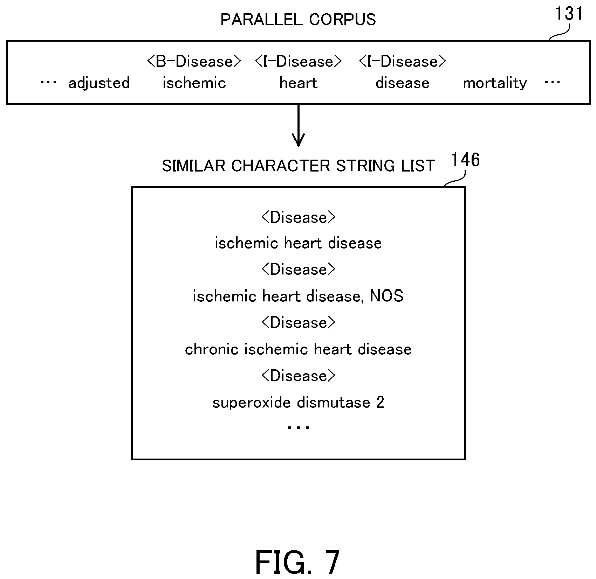

FIG. 7 depicts one example of extraction of other named entities with similar character strings.

Next, the information processing apparatus 100 generates a similar character string list 146 for an English named entity included in the parallel corpus 131 by referring to an English dictionary of terminology in the biomedical field. The similar character string list 146 indicates other English named entities that are similar to the English named entity.

The information processing apparatus 100 stores an English terminology dictionary for each named entity class. Accordingly, the information processing apparatus 100 stores a terminology dictionary of gene names, a terminology dictionary of drug names, a terminology dictionary of disease names, and a terminology dictionary of mutation names. The information processing apparatus 100 selects a terminology dictionary corresponding to a named entity class determined by named entity recognition.

The information processing apparatus 100 searches the selected terminology dictionary for another English named entity with a character string that is similar to an English named entity included in the parallel corpus 131. The information processing apparatus 100 decomposes an English named entity included in the parallel corpus 131 into n-grams in units of characters. The information processing apparatus 100 also decomposes each English named entity included in the terminology dictionary into n-grams in units of characters.

The information processing apparatus 100 defines a vector in which different dimensions are assigned to different n-grams. For a named entity in the parallel corpus 131, the information processing apparatus 100 generates a vector in which a dimension corresponding to an n-gram that appears in the named entity is set at 1 and the other dimensions are set to 0. For each named entity in the terminology dictionary, the information processing apparatus 100 also generates a vector in which a dimension corresponding to an n-gram that appears in the named entity is set to 1 and the other dimensions are set to 0.

The information processing apparatus 100 calculates the cosine similarity of vectors between the named entity in the parallel corpus 131 and the named entities in the terminology dictionary. The information processing apparatus 100 extracts named entities whose cosine similarity exceeds a threshold from the terminology dictionary. However, the information processing apparatus 100 may use another similarity index such as edit distance.

The information processing apparatus 100 generates the similar character string list 146 including the named entities that have been extracted from the terminology dictionary. The similar character string list 146 indicates English named entities with the same entity class as the named entity in the parallel corpus 131 and a similar character string.

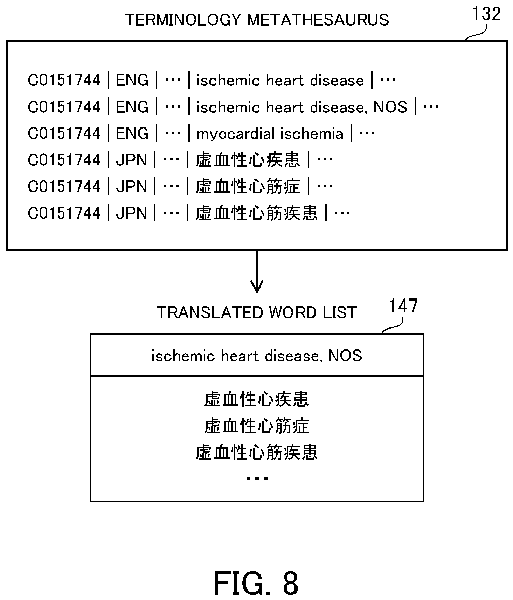

FIG. 8 depicts an example extraction of possible terminology pairs.

Next, the information processing apparatus 100 refers to a terminology metathesaurus 132 in the biomedical field. A translated word list 147 indicates Japanese named entities corresponding to the English named entities. Two or more Japanese named entities may exist for one English named entity. As a general rule, the terminology dictionary referred to to extract similar named entities and the terminology metathesaurus 132 referred to to specify translated words are different dictionaries. However, the same dictionary may be referred to in both cases.

The terminology metathesaurus 132 is a biomedical database indicating terminology in multiple languages in the biomedical field. As one example, the terminology metathesaurus 132 is Unified Medical Language System (UMLS). The terminology metathesaurus 132 includes a plurality of records. Each record includes a column indicating identifiers that identify concepts, a column indicating natural language, and a column indicating named entities. The terminology metathesaurus 132 includes named entities in different languages that express the same concept. The terminology metathesaurus 132 may include a plurality of named entities of the same natural language that express the same concept.

As another example of extraction of translated words for named entities, in addition to the example of FIG. 8, the following example is provided.

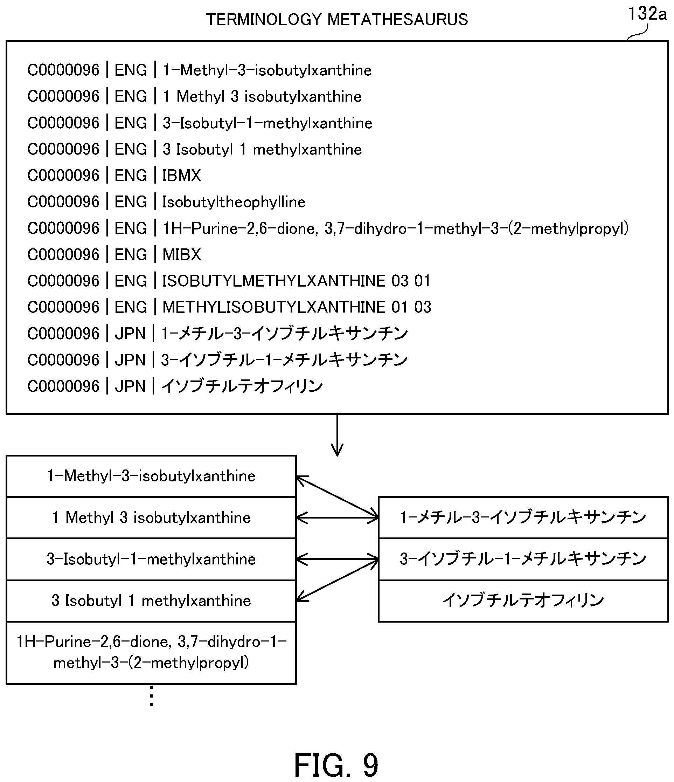

FIG. 9 depicts another example extraction of possible terminology pairs.

UMLS Metathesaurus is organized by concepts (concept names or concept IDs) such that lexical variants, synonyms, and multilingual translations of a terminology are associated with the same concept. A terminology metathesaurus 132a illustrates a sample organization of the UMLS Metathesaurus for a terminology "1-Methyl-3-isobutylxanthine" in English and Japanese. Other data elements of the terminology except concept IDs, multiple languages, and string names are omitted for simplicity. The string names include lexical variants, synonyms, and multilingual translations of the terminology. In FIG. 9, an English and Japanese terminology pair joined by a double-sided arrow is a translation. An English and Japanese terminology pair that is not joined by a double-sided arrow is not a translation.

The UMLS Metathesaurus consists of both non-parallel and parallel translations of the English terminologies. For example, in FIG. 9, "1- 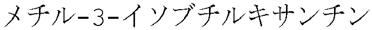 (1-mechiru-3-isobuchiru kisanchin)" is a translation of "1-Methyl-3-isobutylxanthine" and "1 Methyl 3 isobutylxanthine", not a translation of "1H-Purine-2,6-dione, 3,7-dihydro-1-methyl-3-(2-methylpropyl)". Because it is difficult to distinguish which Japanese terminologies are translations of the English terminologies, multilingual semantic similarity may be used to select only the Japanese terminologies which are likely translations of the English terminologies.

As one example, the English named entities "ischemic heart disease", "ischemic heart disease, NOS", and "myocardial ischemia" and the Japanese named entities " 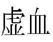 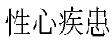 (kyoketsusei shin shikkan)", " 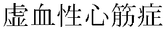 (kyoketsusei shin kinshou)", and " 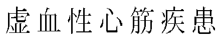 (kyoketsusei shinkin shikkan)" are named entities that express the same concept.

The information processing apparatus 100 searches the terminology metathesaurus 132 for English named entities included in the similar character string list 146. The information processing apparatus 100 extracts Japanese named entities with the same concepts as such named entities from the terminology metathesaurus 132. The information processing apparatus 100 generates a translated word list 147 including the extracted Japanese named entities.

At this time, the information processing apparatus 100 may extract every Japanese named entity with the same concept and have high multilingual semantic score with the English named entity from the terminology metathesaurus 132, or may narrow down the Japanese named entities. As one example, the information processing apparatus 100 calculates a multilingual distributed representation vector of an English named entity and a multilingual distributed representation vector of a Japanese named entity candidate. The information processing apparatus 100 calculates the degree of similarity between the English named entity and Japanese named entity candidates using the multilingual semantic similarity. The information processing apparatus 100 extracts only Japanese named entities whose degree of similarity exceeds a threshold from the terminology metathesaurus 132.

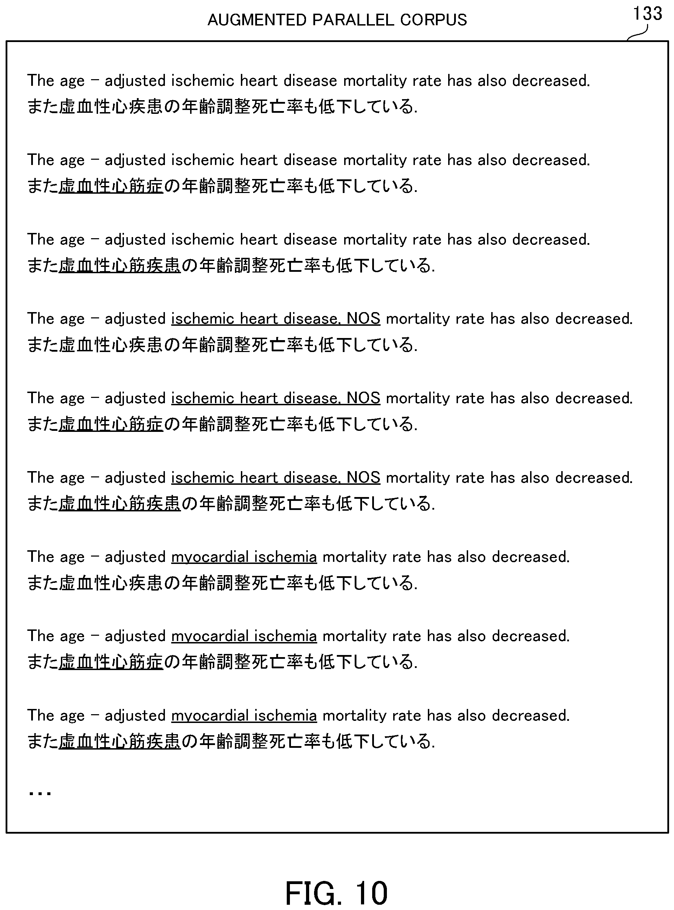

FIG. 10 depicts one example of an augmented parallel corpus.

The information processing apparatus 100 selects one English named entity from the similar character string list 146 and selects one Japanese named entity from the translated word list 147 to generate a pair of an English named entity and a Japanese named entity. By doing so, the information processing apparatus 100 generates a plurality of pairs of an English named entity and a Japanese named entity.

The information processing apparatus 100 replaces an English named entity included in the parallel corpus 131 with an English named entity included in the generated named entity pair. The information processing apparatus 100 also replaces a Japanese named entity included in the parallel corpus 131 with a Japanese named entity included in the same named entity pair. By doing so, the information processing apparatus 100 uses a plurality of named entity pairs to generate an augmented parallel corpus 133 that includes a plurality of pairs of English and Japanese sentences.

The terminology metathesaurus 132 may include two or more Japanese named entities corresponding to an English named entity included in the parallel corpus 131. In this case, the information processing apparatus 100 is also able to generate a pair of English and Japanese sentences by changing only the Japanese named entity in the parallel corpus 131 without changing the English named entity of the parallel corpus 131.

As one example, the augmented parallel corpus 133 includes sentence pairs in which " 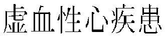 (kyoketsusei shin shikkan)" in the parallel corpus 131 has been replaced with " 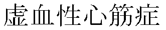 (kyoketsusei shin kinshou)" or " 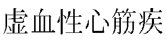 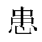 (kyoketsusei shinkin shikkan)". The augmented parallel corpus 133 also includes sentence pairs in which "ischemic heart disease" in the parallel corpus 131 has been replaced with "ischemic heart disease, NOS". The augmented parallel corpus 133 further includes sentence pairs in which " 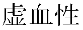 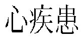 (kyoketsusei shin shikkan)" in the parallel corpus 131 has been replaced with " 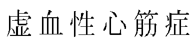 (kyoketsusei shin kinshou)" or " 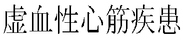 (kyoketsusei shinkin shikkan)". The augmented parallel corpus 133 also includes sentence pairs in which "ischemic heart disease" in the parallel corpus 131 has been replaced with "myocardial ischemia". The augmented parallel corpus 133 further includes sentence pairs in which " 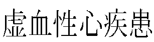 (kyoketsusei shin shikkan)" in the parallel corpus 131 has been replaced with " 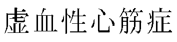 (kyoketsusei shin kinshou)" or " 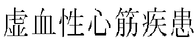 (kyoketsusei shinkin shikkan)".

Here, the terminology in the biomedical field may be compound terms and may have a nested structure. This means that simple substitution of one word for another may create non-existent terminology. On the other hand, the information processing apparatus 100 refers to a terminology dictionary outside the parallel corpus 131 and replaces character strings in units of named entities. By doing so, the risk of creating non-existent named entities is reduced and the quality of the augmented parallel corpus 133 is improved.

The risk of changing a part of speech when replacing a character string, such as replacing a noun with a verb, is also reduced. By doing so, the quality of the augmented parallel corpus 133 is improved. The information processing apparatus 100 is also able to refer to an external terminology dictionary and add new named entities not included in the original parallel corpus 131 to the augmented parallel corpus 133. This widens the range of sentence pair variations, enriching the augmented parallel corpus 133.

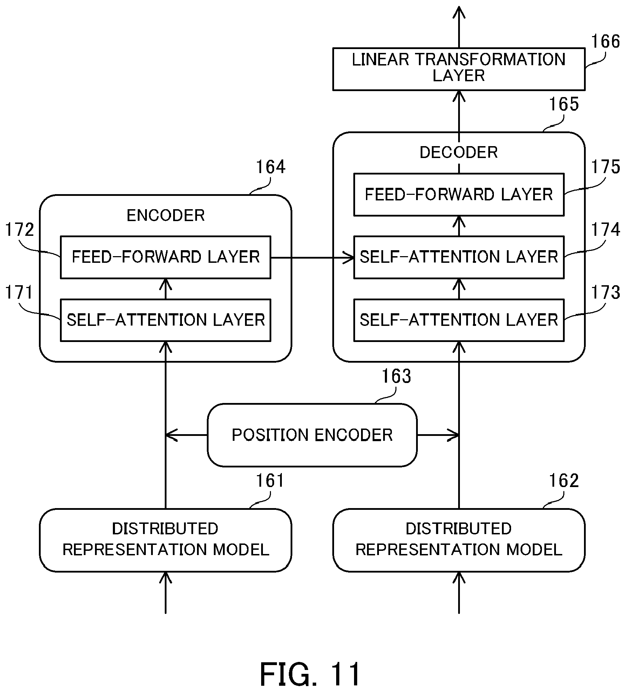

FIG. 11 depicts an example structure of a machine translation model.

The information processing apparatus 100 uses the augmented parallel corpus 133 to train a machine translation model. Transformer is used for the machine translation model. The machine translation model includes distributed representation models 161 and 162, a position encoder 163, an encoder 164, a decoder 165, and a linear transformation layer 166. The encoder 164 includes a self-attention layer 171 and a feed-forward layer 172. The decoder 165 includes self-attention layers 173 and 174 and a feed-forward layer 175.

The distributed representation model 161 converts English tokens into distributed representation vectors. The distributed representation model 161 receives an input of an English token string representing the original text. The distributed representation model 162 converts Japanese tokens into distributed representation vectors. The distributed representation model 162 receives an input of a Japanese token string representing part of a translated text. The token string inputted into the distributed representation model 162 is a part of a translated sentence where the translated words to be used have already been determined, and is a range from the beginning of the translated sentence to a token that immediately precedes the token currently being translated.

The position encoder 163 converts token numbers indicating the position of each token in the sentence into a distributed representation vector. As examples, a sine function or a cosine function is used to convert the token numbers into a distributed representation vector. The position encoder 163 concatenates the distributed representation vector of the token numbers to the rear of the distributed representation vector of the tokens in the original text outputted by the distributed representation model 161, and inputs the resulting vector into the self-attention layer 171. The position encoder 163 also concatenates the distributed representation vector of the token numbers to the rear of the distributed representation vector of the tokens in the translated sentence outputted by the distributed representation model 162 and inputs the resulting vector into the self-attention layer 173.

The self-attention layer 171 transforms the distributed representation vector of each token of the original text using an attention mechanism. The self-attention layer 171 uses a first matrix including trained coefficients to transform a distributed representation vector of a token of interest into a vector called a "query". The self-attention layer 171 also uses a second matrix including trained coefficients to transform the distributed representation vectors of other tokens into vector called "keys". The self-attention layer 171 also uses a third matrix including trained coefficients to transform the distributed representation vector of other tokens into vectors called "values".

The self-attention layer 171 calculates the inner product of the query and the keys to calculate attention weights indicating the importance of other tokens to the token of interest. The self-attention layer 171 updates the vector of the token of interest by weighting the values of the other tokens with the attention weights and combining them with a vector of the token of interest. In this way, the self-attention layer 171 updates the vector of each token with reference to the other tokens.

The feed-forward layer 172 transforms the distributed representation vector of each token outputted by the self-attention layer 171 using trained coefficients. The feed-forward layer 172 inputs the transformed distributed representation vector into the self-attention layer 174. Note that the machine translation model may use a plurality of the encoders 164 connected in series.

The self-attention layer 173 uses the same attention mechanism as the self-attention layer 171 to transform the distributed representation vector of each token in the translated text. The self-attention layer 174 receives distributed representation vectors from the feed-forward layer 172 and the self-attention layer 173 and transforms the distributed representation vectors using an attention mechanism. The feed-forward layer 175 transforms the distributed representation vector outputted by the self-attention layer 174. Note that the machine translation model may use a plurality of the decoders 165 connected in series.

The linear transformation layer 166 uses the vectors received from the feed-forward layer 175 to calculate a degree of confidence of each Japanese word. As one example, the machine translation model adopts the word with the highest degree of confidence as the next word to be included in the translated text. The machine translation model inputs the translated word determined here into the distributed representation model 162.

The information processing apparatus 100 trains the machine translation model using an error backpropagation method. The information processing apparatus 100 inputs an English sentence included in the augmented parallel corpus 133 into the machine translation model and acquires a translated sentence outputted by the machine translation model. The information processing apparatus 100 calculates the error between the Japanese sentence included in the augmented parallel corpus 133 and the acquired translated sentence, and updates the coefficients included in the machine translation model so as to reduce the error. The information processing apparatus 100 repeatedly calculates the error and updates the coefficients while switching the sentence pair being used.

The information processing apparatus 100 translates the inputted English sentence into a Japanese sentence using the trained machine translation model. By training the machine translation model using the augmented parallel corpus 133 in place of the parallel corpus 131, the accuracy of the machine translation model is improved. As one example, a machine translation model trained using the parallel corpus 131 has a Bilingual Evaluation Understudy (BLEU) score of 14.0, but a machine translation model trained using the augmented parallel corpus 133 has a BLEU score of 14.8. The BLEU score is an index indicating the degree of similarity between a reference translation that was manually produced and a machine-translated translation, with a higher score indicating a higher evaluation.

Next, the functions and processing procedure of the information processing apparatus 100 will be described.

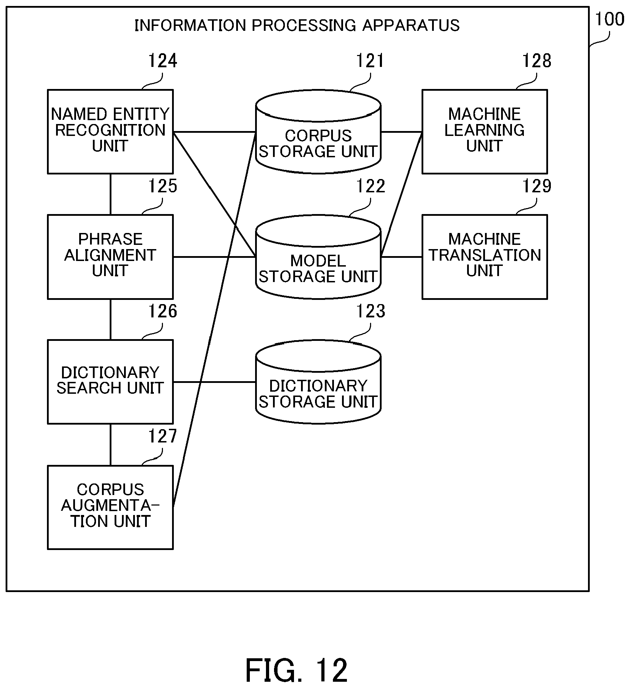

FIG. 12 is a block diagram depicting example functions of an information processing apparatus.

The information processing apparatus 100 includes a corpus storage unit 121, a model storage unit 122, a dictionary storage unit 123, a named entity recognition unit 124, a phrase alignment unit 125, a dictionary search unit 126, a corpus augmentation unit 127, a machine learning unit 128, and a machine translation unit 129. The corpus storage unit 121, the model storage unit 122 and the dictionary storage unit 123 are implemented using the RAM 102 or the HDD 103, for example. The named entity recognition unit 124, the phrase alignment unit 125, the dictionary search unit 126, the corpus augmentation unit 127, the machine learning unit 128, and the machine translation unit 129 are implemented using the CPU 101, the GPU 104, and programs, for example.

The corpus storage unit 121 stores a Japanese-English parallel corpus in the biomedical field. The corpus storage unit 121 also stores an augmented parallel corpus generated from this parallel corpus.

The model storage unit 122 stores various trained machine learning models. These pre-trained machine learning models include a distributed representation model, a named entity recognition model, a phrase alignment model and the like. The model storage unit 122 also stores a trained machine translation model.

The dictionary storage unit 123 stores terminology dictionaries in the biomedical field. These terminology dictionaries include an English terminology dictionary that has been divided into named entity classes. The terminology dictionaries also include multilingual terminology dictionaries in which named entities in different languages that express the same concept have been compiled.

The named entity recognition unit 124 reads a parallel corpus before data augmentation from the corpus storage unit 121 and uses the named entity recognition model stored in the model storage unit 122 to recognize English named entities from the English sentences included in the parallel corpus.

The phrase alignment unit 125 uses the phrase alignment model stored in the model storage unit 122 to determine word correspondence and phrase correspondence between the English and Japanese sentences included in the parallel corpus. Based on the phrase correspondence, the phrase alignment unit 125 specifies Japanese named entities corresponding to the English named entities recognized by the named entity recognition unit 124 from the Japanese text.

The dictionary search unit 126 reads an English terminology dictionary corresponding to the named entity class of the English named entity recognized by the named entity recognition unit 124 from the dictionary storage unit 123. The dictionary search unit 126 extracts other English named entities whose cosine similarity with the recognized English named entity exceeds a threshold value from the read terminology dictionary. By doing so, the dictionary search unit 126 generates a similar character string list for the recognized English named entity.

The dictionary search unit 126 also reads a multilingual terminology dictionary from the dictionary storage unit 123. The dictionary search unit 126 extracts, from the multilingual terminology dictionary, Japanese named entities that express the same concept as the English named entities included in the similar character string list. By doing so, the dictionary search unit 126 generates a translation word list for the other English named entities.

The corpus augmentation unit 127 selects one English named entity from the similar character string list generated by the dictionary search unit 126, and selects a Japanese named entity from the translation word list corresponding to the selected English named entity to generate a named entity pair. By doing so, the corpus augmentation unit 127 generates a plurality of named entity pairs.

The corpus augmentation unit 127 replaces the English named entity recognized by the named entity recognition unit 124 and the Japanese named entity specified by the phrase alignment unit 125 using each of the plurality of named entity pairs. By doing so, the corpus augmentation unit 127 generates an augmented parallel corpus with an increased number of sentence pairs and stores the augmented parallel corpus in the corpus storage unit 121. Note that the corpus augmentation unit 127 may display the augmented parallel corpus on the display apparatus 111 and/or transmit the augmented parallel corpus to another information processing apparatus.

The machine learning unit 128 reads the augmented parallel corpus from the corpus storage unit 121. The machine learning unit 128 uses the augmented parallel corpus as training data to train the machine translation model that converts an original text in English into a Japanese translation, and stores the trained machine translation model in the model storage unit 122. Note that the machine learning unit 128 may display the machine translation model on the display apparatus 111 and/or may transmit the machine translation model to another information processing apparatus.

The machine translation unit 129 receives a text in English. The English text may be inputted by the user or may be received from another information processing apparatus. The machine translation unit 129 reads the trained machine translation model from the model storage unit 122 and inputs the received English text into the machine translation model. The machine translation unit 129 outputs a Japanese translation generated by the machine translation model. The machine translation unit 129 may store the translation in non-volatile storage, display the translation on the display apparatus 111, and/or may transmit the translation to another information processing apparatus.

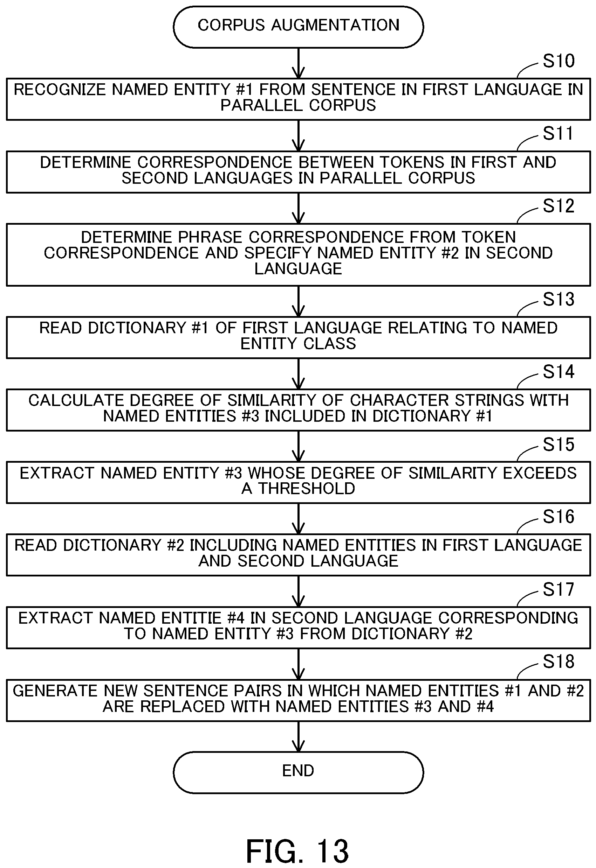

FIG. 13 is a flowchart depicting an example procedure of corpus augmentation.

(S10) The named entity recognition unit 124 uses a named entity recognition model to recognize a named entity #1 from a sentence in a first language included in the parallel corpus.

(S11) The phrase alignment unit 125 divides each of the first language sentence and the second language sentence included in the parallel corpus into tokens. The phrase alignment unit 125 determines the correspondence between the tokens in the first language and the tokens in the second language using the phrase alignment model.

(S12) The phrase alignment unit 125 determines the correspondence between a phrase in the first language and a phrase in the second language from the correspondence between the tokens, and determines a second language named entity #2 corresponding to the named entity #1.

(S13) The dictionary search unit 126 reads out a dictionary #1 of the first language that relates to the named entity class to which the named entity #1 recognized in step S10 belongs.

(S14) The dictionary search unit 126 calculates the degree of similarity between character strings for the named entity #1 included in the parallel corpus and each of a plurality of named entities #3 included in the dictionary #1.

(S15) The dictionary search unit 126 extracts the named entities #3 for which the degree of similarity calculated in step S14 exceeds a threshold from the dictionary #1.

(S16) The dictionary search unit 126 reads out a dictionary #2, in which named entities in the first language and named entities in the second language that express the same concept are written in association with each other.

(S17) The dictionary search unit 126 searches for the named entity #3 in the dictionary #2 and extracts a named entity #4 in the second language corresponding to the named entity #3.

(S18) The corpus augmentation unit 127 replaces the named entity #1 included in the parallel corpus with the named entity #3, and replaces the named entity #2 included in the parallel corpus with the named entity #4 to generate a new sentence pair. By doing so, the corpus augmentation unit 127 generates an augmented parallel corpus including new sentence pairs in addition to the original sentence pairs. Note that in FIG. 13, English is used as one example of the first language and Japanese is used as one example of the second language.

As described above, the information processing apparatus 100 according to the second embodiment generates an augmented parallel corpus in which the number of sentence pairs is larger than the original parallel corpus due to data augmentation, and uses this augmented parallel corpus to train a machine translation model. By doing so, the accuracy of the machine translation model is improved, which improves the quality of machine translation tasks. In particular, the information processing apparatus 100 may increase the number of sentence pairs in the biomedical field where it is not easy to amass a large parallel corpus.

New sentence pairs are produced by replacing phrases in units of named entities. This reduces the risk of creating non-existent named entities compared to simple replacement of character strings. This risk is particularly reduced in the biomedical field, where there are many compound named entities and named entities with a nested structure. In addition, the risk of changing a part of speech due to character string replacement is reduced. Accordingly, the quality of the augmented parallel corpus is improved, and the accuracy of the machine translation model is improved.

Here, during data augmentation, a terminology dictionary in the biomedical field is referred to in addition to the original parallel corpus. By doing so, named entities not included in the original parallel corpus are inserted into the augmented parallel corpus, which increases the sentence pair variations. The named entity after replacement will belong to the same named entity class as the original named entity and have a cosine similarity that exceeds a threshold. This reduces the risk of generating linguistically unnatural sentence pairs.

According to an aspect of the present disclosure, it is possible to augment a parallel corpus.

## Claims

1. A parallel corpus construction program that causes a computer to execute a process comprising:
acquiring a first parallel corpus (13) in which a first sentence including a first named entity (13a) in a first language and a second sentence including a second named entity (13b) in a second language corresponding to the first named entity are associated;
extracting, from first dictionary data (15) including a plurality of named entities in the first language, a third named entity (14a) in the first language whose degree of similarity with the first named entity exceeds a threshold;
specifying a fourth named entity (14b) in the second language that corresponds to the third named entity using second dictionary data (16) indicating correspondence between named entities in the first language and named entities in the second language; and
generating a second parallel corpus (14), which differs from the first parallel corpus, by replacing the first named entity included in the first sentence with the third named entity and replacing the second named entity included in the second sentence with the fourth named entity.

2. The parallel corpus construction program according to claim 1,
further causing the computer to execute a process (S13) of determining a named entity class (141) of the first named entity using a trained named entity recognition model and selecting the first dictionary data based on the named entity class out of the first dictionary data including different named entities.

3. The parallel corpus construction program according to claim 1,
wherein the extracting of the third named entity includes a process of calculating a degree of character string similarity between a character string indicating the first named entity and a character string (146) indicating the third named entity as the degree of similarity.

4. The parallel corpus construction program according to claim 1,
wherein the second dictionary data is multilingual terminology dictionary data (132) in which named entities in a plurality of languages that express a concept are written in association with an identifier that identifies the concept.

5. The parallel corpus construction program according to claim 1,
wherein the specifying of the fourth named entity includes a process that uses, when the second dictionary data (132) includes a plurality of fourth named entities that are associated with the third named entity, a distributed representation vector of a word included in the third named entity and distributed representation vectors of words included in the plurality of fourth named entities to select the fourth named entity out of the plurality of fourth named entities.

6. The parallel corpus construction program according to any one of claim 1 to claim 5,
wherein the first language is a language used in an original text inputted into a machine translation model and the second language is a language used in translated text outputted from the machine translation model.

7. A parallel corpus construction method executed by a computer, the parallel corpus construction method comprising:
acquiring a first parallel corpus (13) in which a first sentence including a first named entity (13a) in a first language and a second sentence including a second named entity (13b) in a second language corresponding to the first named entity are associated;
extracting, from first dictionary data (15) including a plurality of named entities in the first language, a third named entity (14a) in the first language whose degree of similarity with the first named entity exceeds a threshold;
specifying a fourth named entity (14b) in the second language that corresponds to the third named entity using second dictionary data (16) indicating correspondence between named entities in the first language and named entities in the second language; and
generating a second parallel corpus (14), which differs from the first parallel corpus, by replacing the first named entity included in the first sentence with the third named entity and replacing the second named entity included in the second sentence with the fourth named entity.

8. An information processing apparatus comprising:
storage means for storing a first parallel corpus (13), in which a first sentence including a first named entity (13a) in a first language and a second sentence including a second named entity (13b) in a second language corresponding to the first named entity are associated, first dictionary data (15) including a plurality of named entities in the first language, and second dictionary data (16) indicating correspondence between named entities in the first language and named entities in the second language; and
processing means for extracting, from the first dictionary data, a third named entity (14a) in the first language whose degree of similarity with the first named entity exceeds a threshold, specifying a fourth named entity (14b) in the second language that corresponds to the third named entity using the second dictionary data, and generating a second parallel corpus (14), which differs from the first parallel corpus, by replacing the first named entity included in the first sentence with the third named entity and replacing the second named entity included in the second sentence with the fourth named entity.
